# EUROPEAN PATENT SPECIFICATION

(11) **EP 4 032 455 B1**
(45) Date of publication and mention of the grant of the patent: **06.08.2025**
(21) Application number: 20865017.6
(22) Date of filing: 02.06.2020
(51) Int. Cl.: A47L 11/40, A47L 11/282

(54) **CLEANER**
REINIGER
DISPOSITIF DE NETTOYAGE

(30) Priority: 17.09.2019 KR 20190114157
(43) Date of publication of application: 27.07.2022
(73) Proprietor: LG Electronics Inc., SEOUL 07336 (KR)
(72) Inventor: AHN, Gee Young, Seoul 08592 (KR); KIM, Jong Hoon, Seoul 08592 (KR); KIM, Young Ho, Seoul 08592 (KR)
(74) Representative: Ter Meer Steinmeister & Partner
(86) International application number: PCT/KR2020/007162
(87) International publication number: WO 2021/054568

(56) References cited:
- EP-A1- 3 440 981
- AU-A4- 2018 102 050
- JP-A- 2005 211 368
- KR-A- 20150 057 959
- KR-A- 20190 003 776
- US-A1- 2011 191 976
- US-A1- 2016 331 200
- US-A1- 2018 249 872

## Description

### TECHNICAL FIELD

The present invention relates to a cleaner, and more specifically, to a cleaner capable of mopping a floor by a pair of mops that rotate while coming into contact with the floor.

### BACKGROUND

A robot cleaner may include a motor, various sensors, and artificial intelligence (AI) technology to clean an area requiring cleaning while traveling autonomously.

The robot cleaner may be configured to suction dust using a vacuum, to sweep up dust, or to wipe a surface using a mop.

As related art related to a robot cleaner, Korean Patent No. 10-1613446 (hereinafter referred to as "related art 1") discloses "a robot cleaner and a method for operating it." The robot cleaner disclosed in related art 1 includes a main body, a driver, a first rotating member and a second rotating member. In addition, the robot cleaner disclosed in related art 1 includes a first cleaner and a second cleaner made of cloth, a mop, a nonwoven fabric, a brush, or the like. The first cleaner is coupled to a first fixing member of the first rotating member, and the second cleaner is coupled to a second fixing member of the second rotating member.

According to related art 1, as the first cleaner and the second cleaner are rotated by the rotational motion of the first rotating member and the second rotating member, foreign matter stuck to the floor may be removed through friction with the floor surface, and when a frictional force with the floor surface is generated, the frictional force can be used as power for moving the robot cleaner. That is, related art 1 describes that the robot cleaner can move while cleaning the floor based on the first cleaner and the second cleaner being rotated.

However, related art 1 fails to consider or recognize the following issue.

According to related art 1, at least one of the first cleaner or the second cleaner may be separated, respectively, from the first fixing member or the second fixing member. The robot cleaner may be inadvertently operated while at least one of the first cleaner or the second cleaner is separated from the robot cleaner. For example, a user may accidentally operate the robot cleaner without recognizing that the first cleaner or the second cleaner is separated from the robot cleaner, or the first cleaner or the second cleaner may unintendedly become separated from the robot cleaner by friction with the floor or due to jamming.

If the first fixing member or the second fixing member are rotated while directly rubbing against the floor, the first fixing member or the second fixing member may be damaged or may scratch the floor.

Meanwhile, the robot cleaner disclosed in related art 1 includes a liquid management unit for discharging liquid to the first cleaner and the second cleaner. However, related art 1 fails to consider or recognize an issue relating to consumption of the liquid stored in the liquid management unit.

For example, in the robot cleaner disclosed in related art 1, the liquid stored in the liquid management unit decreases as a result of use. Here, the robot cleaner may become imbalanced as the center of gravity in the entire robot cleaner changes. As a result, the robot cleaner may not move or clean as intended.

In particular, since the robot cleaner disclosed in related art 1 moves or travels based on the frictional forces with the floor that are generated when the first cleaner and the second cleaner are rotated, changes in the center of gravity in the robot cleaner may cause changes in the frictional force and a contact points between the floor and the first cleaner or the second cleaner such that the robot cleaner may not move an intended direction or with an intended speed or force.

In related art 1, the liquid management unit may be disposed at a center position such that a center of gravity of the liquid management unit corresponds to the center of gravity of the first type of robot cleaner, and the center of gravity of the robot cleaner does not change as liquid is used, but this design may cause many design constraints.

As further related art related to a robot cleaner, Korean Patent Registration No. 10-2000068 (hereinafter referred to as 'related art 2') discloses a cleaner that includes a mop module including a mop portion and a collection module.

The cleaner disclosed in related art 2 provides various advantages such as effective mopping and travelling, the mop part easily detachable from the cleaner and easier manipulation of the cleaner. However, improvement of the cleaner is required when taking account of the following problems.

The cleaner disclosed in related art 2 includes a mop portion and a rotating plate. The mop portion is detachable from a mop fixing portion of the rotating plate. In the cleaner disclosed in related art 2, the cleaner may be operated while the mop portion is separated from the cleaner. In this case, the rotating plate or the floor may be damaged, as described in relation to related art 1.

AU 2018 102 050 A4 discloses an autonomous floor cleaner. The floor cleaner comprises a brush chamber, a brushroll rotatably mounted in the brush chamber, a controller for controlling the operation of the autonomous floor cleaner, and a fluid delivery system. The floor cleaner comprises a supply tank for storing a supply of cleaning fluid, at least one fluid distributor in fluid communication with the supply tank and configured to deposit cleaning fluid onto a surface to be cleaned; and a fluid delivery pump configured to control a flow of the cleaning fluid to the at least one fluid distributor, wherein a pulse width modulation signal powering the pump, from the controller, is further configured to provide a set flowrate of deposited cleaning fluid.

EP 3 440 981 A1 discloses a robot cleaner. The robot cleaner includes a cleaning module having a left spin-mop and a right spin-mop configured to contact a floor while rotating in a clockwise direction or in a counterclockwise direction when viewed from above. The robot cleaner also includes a controller that manages the cleaning module such that, when the robot cleaner travels in a zigzag pattern including a first travel, during which the robot cleaner travels straight in a first direction, and a second travel, during which the robot cleaner travels straight in a second direction, which is opposite the first direction, a movement trajectory of the left spin-mop or the right spin-mop during the second travel overlaps a movement trajectory of the left spin-mop and a movement trajectory of the right spin-mop during the first travel.

US 2018/249872 A1 discloses a cleaner. The cleaner performs an autonomous driving, includes: a cleaner body; a driving unit for moving the cleaner body; a camera for detecting 3D coordinate information; a memory for storing pattern information related to a charging station; and a controller for comparing the 3D coordinates information detected by the camera with the pattern information related to the charging station stored in the memory, and for determining whether the charging station is positioned near the cleaner body based on a result of the comparison.

As the cleaning operation in the cleaner disclosed in related art 2 is performed while each of the mop module and the collection module comes into contact with the floor, it is less likely that the state of the mop portion in contact with the floor will be changed in accordance with consumption of water. However, there is a need to consider providing a method of facilitating stable cleaning and operation of the cleaner even though a separate collection module is not provided.

### DISCLOSURE OF INVENTION

### TECHNICAL PROBLEM

An aspect of the present invention is to provide a cleaner equipped with a pair of mops that rotate in contact with the floor, capable of preventing the cleaner from being damaged or the floor from being damaged even when the cleaner is operated in a separated state in which the mops are separated from the cleaner.

Another aspect of the present invention is to provide a cleaner in which mops come into intensive contact with the floor when the mops are coupled to the cleaner, and parts coupled to the mops are spaced apart from the floor when the mops are separated from the cleaner.

Still another aspect of the present invention is to provide a cleaner equipped with a water container configured to supply liquid (water) to a pair of mops, capable of facilitating stable contact and friction between the mops and the floor when the entire center of gravity of the cleaner changes in accordance with consumption of the liquid, even when the water container is not disposed at the center of gravity of the cleaner.

Still another aspect of the present invention is to provide a cleaner capable of facilitating stable mopping even when a motor, a battery, and a water container are respectively disposed at different positions so as to form a relatively flat cleaner.

Still another aspect of the present invention is to provide a cleaner in which a traveling direction of the cleaner can be controlled by a pair of mops rotating in contact with the floor, and that includes an auxiliary means for controlling the traveling direction of the cleaner.

### SOLUTION TO PROBLEM

The problem is solved by the cleaner that is set out in the appended set of claims.

### ADVANTAGEOUS EFFECTS OF INVENTION

According to the present invention, the cleaner includes the first support wheel and the second support wheel and the auxiliary wheel, in which the lowest parts of the first rotating plate and the second rotating plate are higher than the virtual reference line connecting the lowest part of the support wheel to the lowest part of the auxiliary wheel, and the lowest parts of the first mop and the second mop are lower than the reference line. As a result, mopping may be performed by the first mop and the second mop when the first mop and the second mop are coupled to the first rotating plate and the second rotating plate, and the first rotating plate and the second rotating plate may be spaced apart from the floor when the first mop and the second mop are separated from the first rotating plate and the second rotating plate.

According to embodiments of the present invention, the cleaner may prevent the first rotating plate and the second rotating plate from rubbing against the floor even when the operation of the cleaner is performed when the first mop and the second mop are separated from the first rotating plate and the second rotating plate. Moreover, the present invention can provide an effect of effectively preventing the cleaner or the floor from being damaged as the support wheel and the auxiliary wheel move while rolling on the floor, even when the cleaner unintendedly moves on the floor.

According to embodiments of the present invention, the cleaner includes the first actuator disposed above the first rotating plate, the second actuator disposed above the second rotating plate, the battery disposed to lean toward the first support wheel and the second support wheel, and the water container disposed above the auxiliary wheel. Accordingly, upon initial operation of the cleaner, cleaning can be performed while only the first mop and the second mop contact the floor, and as the liquid is exhausted, cleaning can be performed while the first mop and the second mop and the first support wheel and the second support wheel contact the floor.

Thus, stable mopping can be performed even when the cleaner includes a water container which is not disposed at the center of gravity, and the height of the cleaner can be formed to be relatively low (flat).

Further, in the cleaner according to embodiments of the present invention, as the rotation axis of the first support wheel and the rotation axis of the second support wheel are parallel to the virtual connection line connecting the rotation axis of the first rotating plate to the rotation axis of the second rotating plate, the first support wheel and the second support wheel can assist in forward movement of the cleaner.

More specific effects and additional effects to be achieved by the cleaner according to the embodiment of the present invention will be described below with reference to the accompanying drawings.

### BRIEF DESCRIPTION OF THE DRAWINGS

FIG. 1 is a diagram illustrating a perspective view of a cleaner according to an embodiment of the present invention.
FIG.2 a diagram illustrating the partial configuration separated from the cleaner shown in FTG 1.
FIG. 3 is a diagram illustrating a back view of the cleaner shown in FIG. 1.
FIG.4 a diagram illustrating the partial configuration separated from the cleaner shown in FTG 3.
FIG. 5A is a diagram illustrating a bottom view of a cleaner according to an embodiment that is not part of the claimed invention, in which a first rotating plate and a second rotating plate are represented by dotted lines.
FIG. 5B is a diagram illustrating a side view of the cleaner shown in FIG. 5A along with an enlarged view of the lower portion of the cleaner.
FIG. 6 is a diagram illustrating a bottom view of a cleaner of an embodiment of the present invention, in which a first rotating plate and a second rotating plate are represented by dotted lines.
FIGS. 7A and 7B are diagrams illustrating a side view of the cleaner shown in FIG. 6 along with an enlarged view of the lower portion of the cleaner.
FIGS. 8A and 8B are diagrams illustrating a side view of the cleaner while excluding a partial configuration of the cleaner shown in FIG. 6, along with an enlarged view of the lower portion of the cleaner.
FIG. 9 is a diagram illustrating a bottom view of a cleaner according to an embodiment of the present invention, in which a first rotating plate, a second rotating plate, a first actuator, and a second actuator are represented by dotted lines.
FIG. 10 is a diagram illustrating an exploded perspective view of the cleaner shown in FIG. 9.
FIG. 11 is a cross-sectional diagram schematically illustrating a cleaner and components thereof according to an embodiment of the present invention.
FIG. 12 is a diagram illustrating the size of each component in the cleaner shown in FIG. 6.

### DESCRIPTION OF REFERENCE NUMERALS

| | | | |
|---|---|---|---|
| 1 : | cleaner | 10 : | first rotating plate |
| 11 : | first central plate | 12 : | first outer plate |
| 13 : | first spokes | 20 : | second rotating plate |
| 21 : | second central plate | 22 : | second outer plate |
| 23 : | second spokes | 30 : | first mop |
| 40 : | second mop | 100 : | body |
| 110 : | support wheel | 120 : | first support wheel |
| 130 : | second support wheel | 140 : | auxiliary wheel |
| 150 : | auxiliary wheel body | 160 : | first actuator |
| 161 : | first case | 162 : | first motor |
| 163 : | first gears | 170 : | second actuator |
| 171 : | second case | 172 : | second motor |
| 173 : | second gears | 180 : | controller |
| 190 : | bumper | 200 : | first sensor |
| 210 : | second sensor | 220 : | battery |
| 230 : | water container | 240 : | water supply tube |
| L1 : | connection line | L2 : | reference line |
| L3 : | first reference line | L4 : | second reference line |

### DETAILED DESCRIPTION

Hereinafter, exemplary embodiments of the present invention will be described in detail with reference to accompanying drawings, and the same or similar elements are designated with the same numeral references regardless of numerals in the drawings.

X, Y, and Z directions shown in the accompanying drawings are orthogonal to each other.

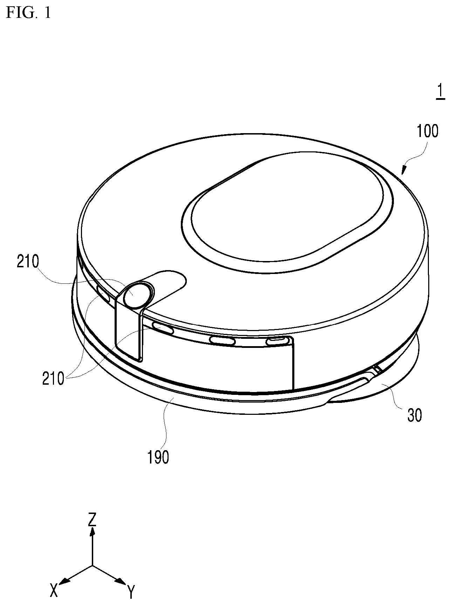

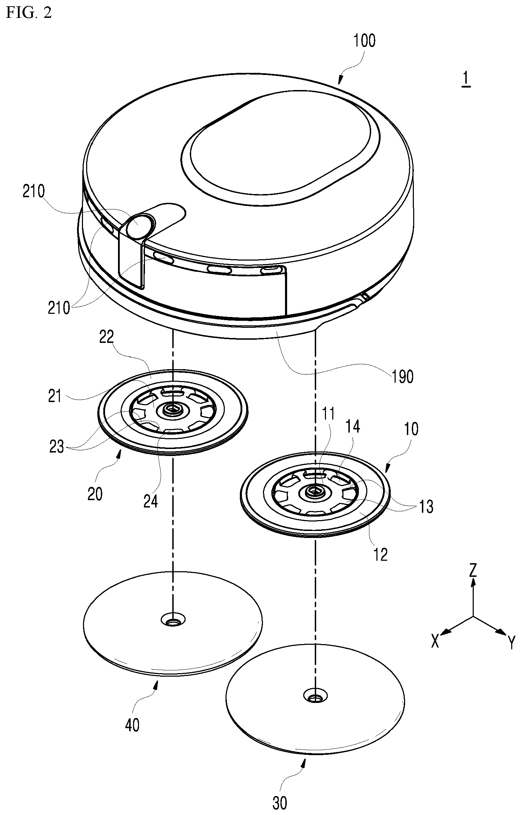

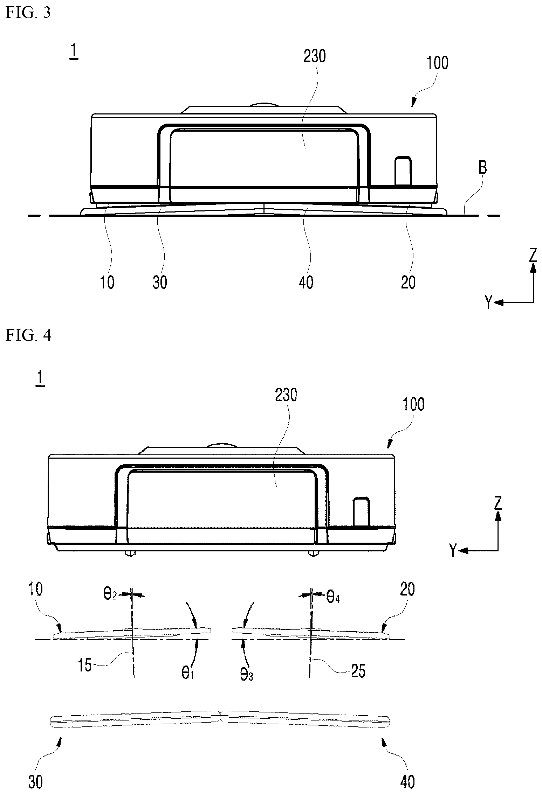

FIG. 1 is a diagram illustrating a perspective view of a cleaner 1 according to an embodiment of the present invention. FIG. 2 is a diagram illustrating the partial configuration separated from the cleaner 1 shown in FIG. 1. FIG. 3 is a diagram illustrating a back view of the cleaner 1 shown in FIG. 1. FIG. 4 is a diagram illustrating the partial configuration separated from the cleaner 1 shown in FIG. 3.

The cleaner 1 according to embodiments of the present invention may be a robot cleaner 1. The cleaner 1 according to an embodiment of the present invention may be placed on a floor surface B and may move along and clean the floor surface B. Accordingly, hereinafter, in order to describe the cleaner 1, a vertical direction may be set based on a state in which the cleaner 1 is placed on the floor.

Further, in the following description, it is assumed that a side of the cleaner 1 where support wheels 110, 120, and 130 (to be described below) are coupled relative to a first rotating plate 10 and a second rotating plate 20 correspond to a "front" side of the cleaner 1.

The 'lowest part' of a component described in embodiments of the present invention may be a part at which each component is located lowest or closest to the floor when the cleaner 1 is placed on the floor.

The cleaner 1 according to an embodiment of the present invention may include a body 100, a first rotating plate 10, a second rotating plate 20, a first mop 30, and a second mop 40.

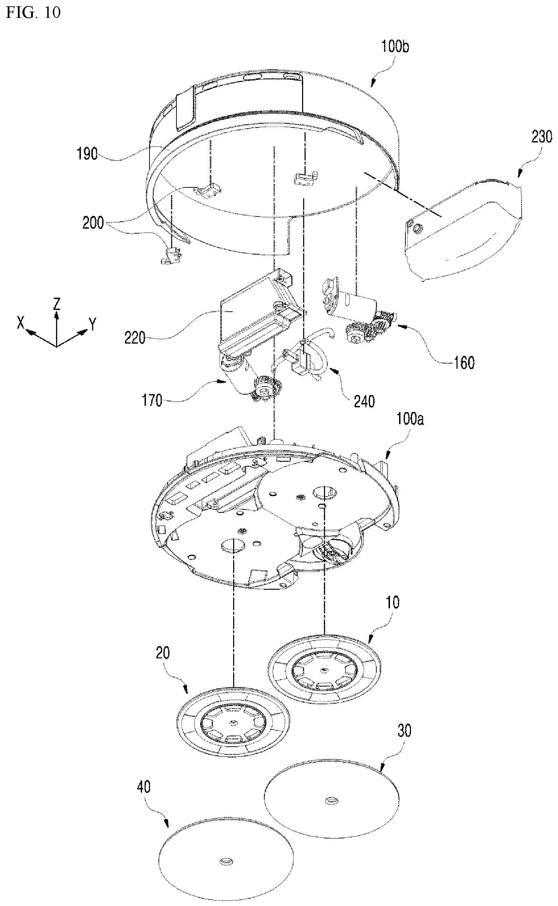

The body 100 may form an overall appearance of the cleaner 1 or may be formed as a frame. Each component constituting the cleaner 1 may be coupled to the body 100, and some components constituting the cleaner 1 may be accommodated in the body 100. The body 100 may be divided into a lower body 100a and an upper body 100b, and the components of the cleaner 1 may be provided in a space where the lower body 100a and the upper body 100b are coupled to each other (see FIG. 10).

In an embodiment of the present invention, the body 100 may have a width (or diameter) larger in the horizontal direction (direction parallel to X and Y) than the height in the vertical direction (direction parallel to Z). Such a body 100 may provide an advantageous structure for helping the cleaner 1 to have a stable structure and to avoid obstacles when moving (traveling).

When viewed from above or below, the body 100 may be formed in various forms, such as a circle, an oval, or a rectangle.

The first rotating plate 10 may be formed to have a predetermined area and may be formed substantially in the form of a flat plate or a flat frame. The first rotating plate 10 may generally be positioned to extend substantially horizontally. As such, the first rotating plate 10 has a width (or diameter) in the horizontal direction set to be significantly larger than the height in the vertical direction. The first rotating plate 10 coupled to the body 100 may be parallel to the floor surface B, or may be inclined with respect to the floor surface B.

The first rotating plate 10 may be formed in a circular plate shape, and the bottom surface of the first rotating plate 10 may generally have a circular shape.

The first rotating plate 10 may be formed in a rotationally symmetrical form as a whole.

The first rotating plate 10 may include a first central plate 11, a first outer plate 12, and first spokes 13.

The first central plate 11 may be rotatably coupled to the body 100 while forming the center of the first rotating plate 10. The first central plate 11 may be coupled to the lower portion of the body 100, and the upper surface of the first central plate 11 may be coupled to a lower surface of the body 100 while facing the lower surface of the body 100.

A rotation axis 15 of the first rotating plate 10 may be formed along a direction passing through the center of the first central plate 11. In addition, the rotation axis 15 of the first rotating plate 10 may be formed along a direction orthogonal to the floor surface B, or may have a predetermined inclination with respect to the direction perpendicular to the floor surface B.

The first outer plate 12 may be formed to surround the first central plate 11 while being spaced apart from the first central plate 11.

The first spokes 13 may connect the first central plate 11 and the first outer plate 12, and are provided in plural and are repeatedly formed along the circumferential direction of the first central plate 11. The first spokes 13 may be arranged at equal intervals. A plurality of holes 14 penetrating vertically between the first spokes 13 may be provided, and a liquid (such as water) discharged from a water supply tube 240 to be described below may be transferred to the first mop 30 through the holes 14.

In the cleaner 1 according to an embodiment of the present invention, the bottom surface of the first rotating plate 10 coupled to the body 100 may form a predetermined incline with respect to the floor surface B. Herein, the rotation axis 15 of the first rotating plate 10 may have a predetermined incline with respect to a direction perpendicular to the floor surface B.

In the cleaner 1 according to an embodiment of the present invention, an angle θ1 formed between the bottom surface of the first rotating plate 10 and the floor surface B may be correspond to an angle θ2 formed between the rotation axis 15 of the first rotating plate 10 and the direction perpendicular to the floor surface B. Accordingly, when the first rotating plate 10 rotates with respect to the body 100, the bottom surface of the first rotating plate 10 may be configured to maintain the same angle with the floor surface B.

The second rotating plate 20 may be formed to have a predetermined area and may be formed in the form of a flat plate or a flat frame. The second rotating plate 20 generally lies horizontally. As such, a width (or diameter) in the horizontal direction may be set to be significantly larger than the height in the vertical direction. The second rotating plate 20 coupled to the body 100 may be disposed parallel to the floor surface B, or may be inclined with respect to the floor surface B.

The second rotating plate 20 may be formed in a substantially circular plate shape, and the bottom surface of the second rotating plate 20 may generally have a circular shape.

The second rotating plate 20 may be formed in a rotationally symmetrical form as a whole.

The second rotating plate 20 may include a second central plate 21, a second outer plate 22, and second spokes 23.

The second central plate 21 may be rotatably coupled to the body 100 while forming the center of the second rotating plate 20. The second central plate 21 may be coupled to the lower portion of the body 100, and the upper surface of the second central plate 21 may be coupled to a lower surface of the body 100 while facing the lower surface of the body 100.

A rotation axis 25 of the second rotating plate 20 may be formed along a direction passing through the center of the second central plate 21. In addition, the rotation axis 25 of the second rotating plate 20 may be formed along a direction orthogonal to the floor surface B, or may have a predetermined inclination with respect to the direction orthogonal to the floor surface B.

The second outer plate 22 is formed to surround the second central plate 21 while being spaced apart from the second central plate 21.

The second spokes 23 connect the second central plate 21 and the second outer plate 22, and are provided in plural and are repeatedly formed along the circumferential direction of the second central plate 21. The second spokes 23 may be arranged at substantially equal intervals. A plurality of holes 24 penetrating vertically between the second spokes 23 may be provided, and the liquid (such as water) discharged from the water supply tube 240 to be described below may be transferred to the second mop 40 through the holes 24.

In the cleaner 1 according to an embodiment of the present invention, the bottom surface of the second rotating plate 20 coupled to the body 100 may form a predetermined incline with respect to the floor surface B. Herein, the rotation axis 25 of the second rotating plate 20 may have a predetermined incline with respect to a direction perpendicular to the floor surface B.

In the cleaner 1 according to an embodiment of the present invention, an angle θ3, which is formed between the bottom surface of the second rotating plate 20 and the floor surface B, may substantially correspond to angle θ4, which is formed between the rotation axis 25 of the second rotating plate 20 and the direction perpendicular to the floor surface B. Accordingly, when the second rotating plate 20 rotates with respect to the body 100, the bottom surface of the second rotating plate 20 may be configured to maintain a same angle with the floor surface B.

In the cleaner 1 according to an embodiment of the present invention, the second rotating plate 20 may be formed to correspond to the first rotating plate 10, or may be formed to be symmetrical to the first rotating plate 10. The first rotating plate 10 may be located on the left side of the cleaner 1, whereas the second rotating plate 20 may be located on the right side of the cleaner 1. Here, the first rotating plate 10 and the second rotating plate 20 may be bilaterally symmetrical to each other with respect to a midline of the body 100 extending in a front-to-rear direction.

The first mop 30 may be formed so that a bottom surface thereof that faces the floor B has a predetermined area, and the first mop 30 has a flat shape. The first mop 30 may have a shape in which the width (or diameter) thereof in the horizontal direction is significantly larger than the height in the vertical direction. When the first mop 30 is coupled to the body 100 side, the bottom surface of the first mop 30 may be parallel to the floor surface B, or may be inclined with respect to the floor surface B.

The bottom surface of the first mop 30 may be generally circular.

The second mop 30 may be formed in a rotationally symmetrical form as a whole.

The second mop 30 may be made of various materials that can clean the floor while being in contact with the floor. To this end, the bottom surface of the first mop 30 may be made of a cloth made of a woven or knitted fabric, a nonwoven fabric, and/or a brush having a predetermined area.

In the cleaner 1 according to an embodiment of the present invention, the first mop 30 may be detachably attached to the bottom surface of the first rotating plate 10, and may be coupled to the first rotating plate 10 to be rotated together with the first rotating plate 10. The first mop 30 may be in close contact with the bottom surface of the first outer plate 12, and may be in close contact with the bottom surface of the first central plate 11 and the first outer plate 12.

The first mop 30 may be detachably attached to the second rotating plate 10 using various devices and methods. In one embodiment, at least a portion of the first mop 30 may be coupled to the first rotating plate 10 by being hooked to or inserted into the first rotating plate 10. In another embodiment, a separate device, such as a clamp that couples the first mop 30 to the first rotating plate 10, may be provided. In still another embodiment, one side of one pair of fastening devices that can be coupled to and separated from each other may be fixed to the first mop 30, and the other side thereof may be fixed to the first rotating plate 10. As a specific example of the fastening device, a pair of magnets that work with each other, a pair of strips of Velcro that are coupled to each other, or a pair of buttons (a female button and a male button) that are coupled to each other may be used.

When the first mop 30 is coupled to the first rotating plate 10, the first mop 30 and the first rotating plate 10 may be coupled to overlap each other, and the first mop 30 may be coupled to the first rotating plate 10 such that the center of the first mop 30 coincides with the center (e.g., rotational axis 15) of the first rotating plate 10.

The second mop 40 may be formed so that a bottom surface thereof that faces the floor has a predetermined area, and the second mop 40 has a flat shape. The second mop 40 has a shape in which the width (or diameter) in the horizontal direction is significantly larger than the height in the vertical direction. When the second mop 40 is coupled to the body 100, the bottom surface of the second mop 40 may be parallel to the floor surface B, or may be inclined with respect to the floor surface B.

The bottom surface of the second mop 40 may be generally circular.

The second mop 40 may be formed in a rotationally symmetrical form as a whole.

The second mop 40 may be made of various materials that can clean the floor while being in contact with the floor. To this end, the bottom surface of the second mop 40 may be made of a cloth made of a woven or knitted fabric, a nonwoven fabric, and/or a brush having a predetermined area.

In the cleaner 1 according to an embodiment of the present invention, the second mop 40 may be detachably attached to the bottom surface of the second rotating plate 20, and may be coupled to the second rotating plate 20 to be rotated together with the second rotating plate 20. The second mop 40 may be in close contact with the bottom surface of the second outer plate 22, and may be in close contact with the bottom surface of the second central plate 21 and the second outer plate 22.

The second mop 40 may be detachably attached to the second rotating plate 20 using various devices and methods. In one embodiment, at least a portion of the second mop 40 may be coupled to the second rotating plate 40 by being hooked to or inserted into the second rotating plate 20. In another embodiment, a separate device, such as a clamp, which couples the second mop 30 to the second rotating plate 10, may be provided. In still another embodiment one side of one pair of fastening devices coupled to and separated from each other may be fixed to the second mop 40 and the other side thereof may be fixed to the second rotating plate 20. As a specific example of the fastening device, a pair of magnets that work with each other, a pair of strips of Velcro that are coupled to each other, or a pair of buttons (a female button and a male button) that are coupled to each other may be used.

When the second mop 40 is coupled to the second rotating plate 20, the second mop 40 and the second rotating plate 20 may be coupled to overlap each other, and the second mop 40 may be coupled to the second rotating plate 20 such that the center of the second mop 40 coincides with the center (e.g., rotational axis 25) of the second rotating plate 20.

In the cleaner 1 according to an embodiment of the present invention, the first rotating plate 10 and the second rotating plate 20 may respectively be inclined with respect to the floor surface B such that the sides of the first rotating plate 10 and the second rotating plate 20 that are closer to each other are spaced further apart from the floor surface B than the sides of the first rotating plate 10 and the second rotating plate 20 that are farther from each other. That is, the first rotating plate 10 and the second rotating plate 20 may be formed such that the sides thereof that are farther from the center of the cleaner 1 are located closer to the floor than the sides thereof that are closer to the center of the cleaner 1 (see FIGS. 3 and 4).

Here, the rotation axis 15 of the first rotating plate 10 may be formed to be perpendicular to the bottom surface of the first rotating plate 10, and the rotation axis 25 of the second rotating plate 20 may be formed to be perpendicular to the bottom surface of the second rotating plate 20.

When the first mop 30 is coupled to the first rotating plate 10 and the second mop 40 is coupled to the second rotating plate 20, the sides of the first mop 30 and the second mop 40 that are farther from each other may be in relatively stronger contact with the floor.

When the first rotating plate 10 rotates, frictional force is generated between the bottom surface of the first mop 30 and the floor surface B. Here, since the generation point and direction of the frictional force deviate from the rotation axis 15 of the first rotating plate 10, the first rotating plate 10 moves against the floor surface B, and the cleaner 1 can thus move along the floor surface B.

Further, when the second rotating plate 20 rotates, frictional force is generated between the bottom surface of the second mop 40 and the floor surface B. Here, since the generation point and direction of the frictional force deviate from the rotation axis 25 of the second rotating plate 20, the second rotating plate 20 moves against the floor surface B, and the cleaner 1 can thus move along the floor surface B.

When the first rotating plate 10 and the second rotating plate 20 rotate at the same speed in opposite directions, the cleaner 1 may move straight, forward or backward. For example, when viewed from above, the cleaner 1 may move forward when the first rotating plate 10 rotates counterclockwise and the second rotating plate 20 rotates clockwise.

When only one of the first rotating plate 10 and the second rotating plate 20 rotates, the cleaner 1 may change direction.

When the rotation speed of the first rotating plate 10 is different from the rotation speed of the second rotating plate or when the first rotating plate 10 and the second rotating plate 20 rotate in the same direction, the cleaner 1 can move while changing direction, and can move in a curved direction

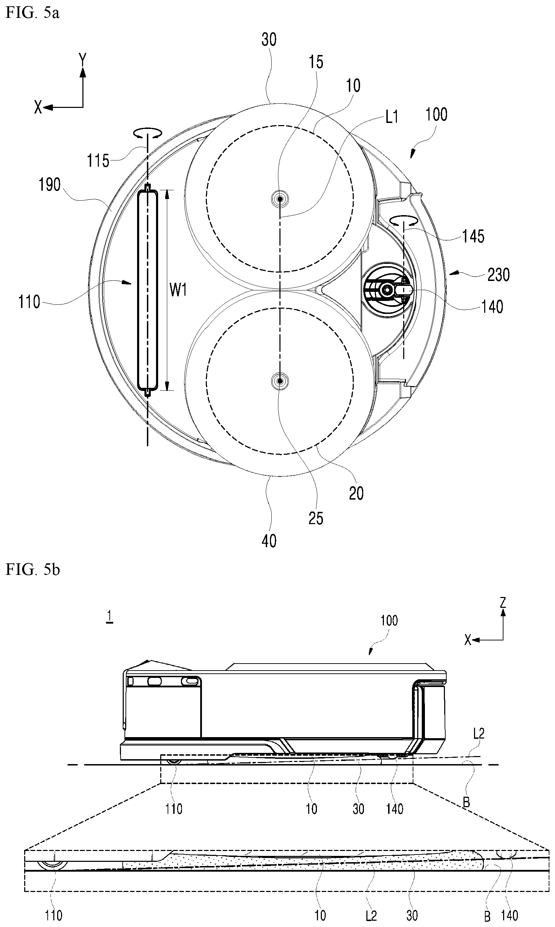

FIG. 5A is a diagram illustrating a bottom view of the cleaner 1 according to another embodiment that is not part of the claimed invention and FIG. 5B is a diagram illustrating a side view of the cleaner 1 shown in FIG. 5A

The cleaner 1 according to another embodiment that is not part of the claimed invention may include at least one support wheel 110 and an auxiliary wheel 140.

The support wheel 110 may be coupled to the lower portion of the body 100 while being spaced apart from the first rotating plate 10 and the second rotating plate 20.

The support wheel 110 may be formed as a common wheel. The support wheel 110 has a rotation axis formed to be parallel to the floor surface B. The support wheel 110 may move while rolling in contact with the floor. As a result, the cleaner 1 may move along the floor surface B.

The support wheel 110 according to an embodiment of the present invention may contact the floor together with the first mop 30 and the second mop 40.

Considering the entire size of the cleaner 1, a width W1 of the support wheel 110 in the direction of the rotation axis may be formed to be relatively wide. More specifically, when the support wheel 110 is placed on the floor surface B (when the rotation axis of the support wheel 110 is parallel to the floor surface B), one support wheel 110 may be formed have a width W1 capable of supporting a part of the load of the cleaner 1 such that the cleaner 1 remains upright without falling sideways. For example, the support wheel 110 may be formed to have a shape such as a roller.

The auxiliary wheel 140 may be coupled to the lower portion of the body 100 while being spaced apart from the first rotating plate 10 and the second rotating plate 20.

A connection line L1 is a virtual line connecting the center of the first rotating plate 10 to the center of the second rotating plate 20 along a horizontal direction (e.g., in a direction parallel to the floor surface B), and the auxiliary wheel 140 and the support wheel 110 may be positioned at opposite sides of the bottom surface of the body 100 with respect to the connection line L1.

The auxiliary wheel 140 according to an embodiment of the present invention may be formed as a common wheel. The auxiliary wheel 140 may have a rotation axis 145 formed parallel to the floor surface B. The auxiliary wheel 140 may move while rolling in contact with the floor. As a result, the cleaner 1 may move along the floor surface B.

However, the auxiliary wheel 140 according to an embodiment of the present invention may not come into contact with the floor surface B when the first mop 30 and the second mop 40 come into contact with the floor.

The cleaner 1 according to an embodiment of the present invention may be formed to move straight along the floor surface B. For example, the cleaner 1 may move straight in the forward direction (toward the X direction), or straight in the backward direction, such as to avoid an obstacle or a drop.

In the cleaner 1 according to an embodiment of the present invention, the lowest parts of the first rotating plate 10 and the second rotating plate 20 may be formed to be higher than a virtual reference line L2 connecting the lowest part of the support wheel 110 to the lowest part of the auxiliary wheel 140, and the lowest parts of the first mop 30 and the second mop 40 may be formed to be lower than the reference line L2.

That is, in the cleaner 1 according to an embodiment of the present invention, the support wheel 110 and the auxiliary wheel 140 do not interfere with the contact of the first mop 30 and the second mop 40 with the floor when the first mop 30 is coupled to the first rotating plate 10 and the second mop 40 is coupled to the second rotating plate 20.

As a result, the first mop 30 and the second mop 40 may come into contact with the floor, and mopping and cleaning can be performed by rotation of the first mop 30 and the second mop 40. Here, the support wheel 110 and the auxiliary wheel 140 may be spaced apart from the floor when the first mop 30 and the second mop 40 contact the floor. Alternatively, the auxiliary wheel 140 may be spaced apart from the floor while the support wheel 110, the first mop 30, and the second mop 40 come into contact with the floor.

In an embodiment of the present invention, when the cleaner 1 is placed on the floor such that the first mop 30 and the second mop 40 are in contact with the floor, the height from the floor surface B to the lowest part of the support wheel 110 is formed to be lower than the height from the floor surface B to the lowest part of the auxiliary wheel 140.

Further, when the first mop 30 and the second mop 40 are separated from the first rotating plate 10 and the second rotating plate 20, the support wheel 110 and the auxiliary wheel 140 may contact the floor, and lower surfaces of the first rotating plate 10 and the second rotating plate 20 may be spaced apart from the floor.

When the first mop 30 and the second mop 40 are separated and the cleaner 1 1 is operated (e.g., rotation of the first rotating plate 10 and the second rotating plate 20 is performed unintendedly), the configuration of cleaner 1 helps to prevent the first rotating plate 10 and the second rotating plate 20 from coming into contact with the floor and rubbing against the floor. As a result, damage to the first rotating plate 10 and the second rotating plate 20 may be avoided, and damage to the floor may be avoided.

In addition, even when the cleaner 1 unintendedly moves on the floor in this state, as the support wheel 110 and the auxiliary wheel 140 can move while rolling on the floor, the present invention may provide an effect of preventing the floor from being scratched, and effectively avoiding damage being caused to the cleaner 1 or the floor.

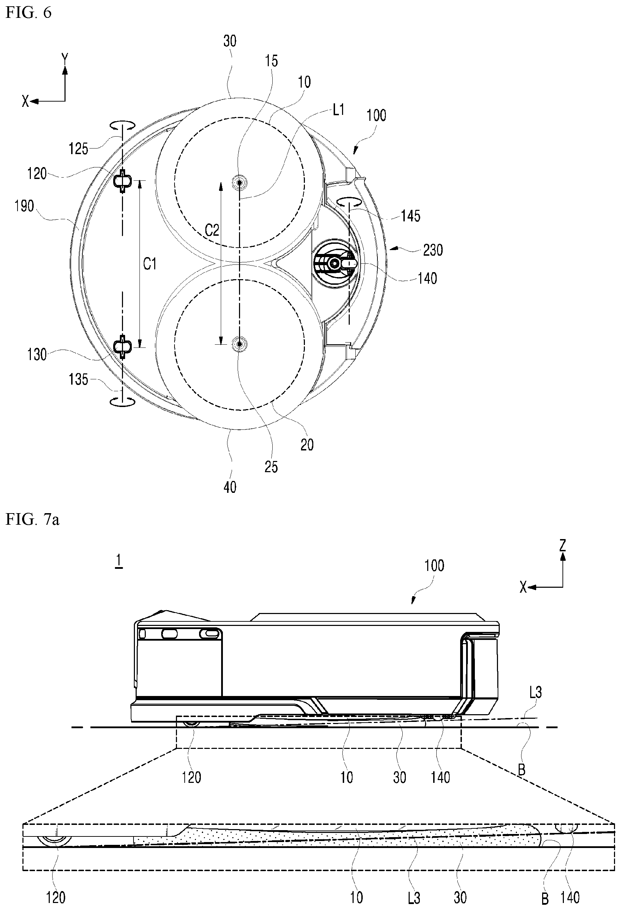

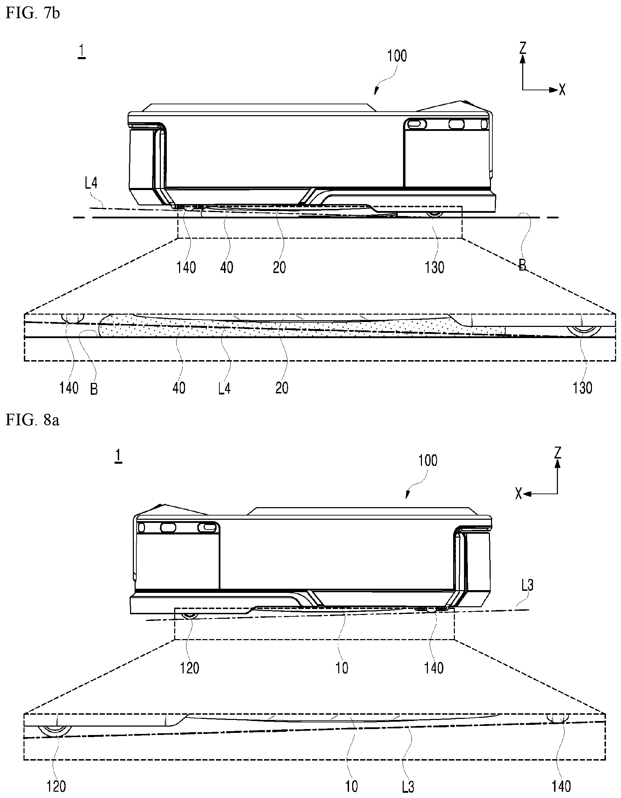

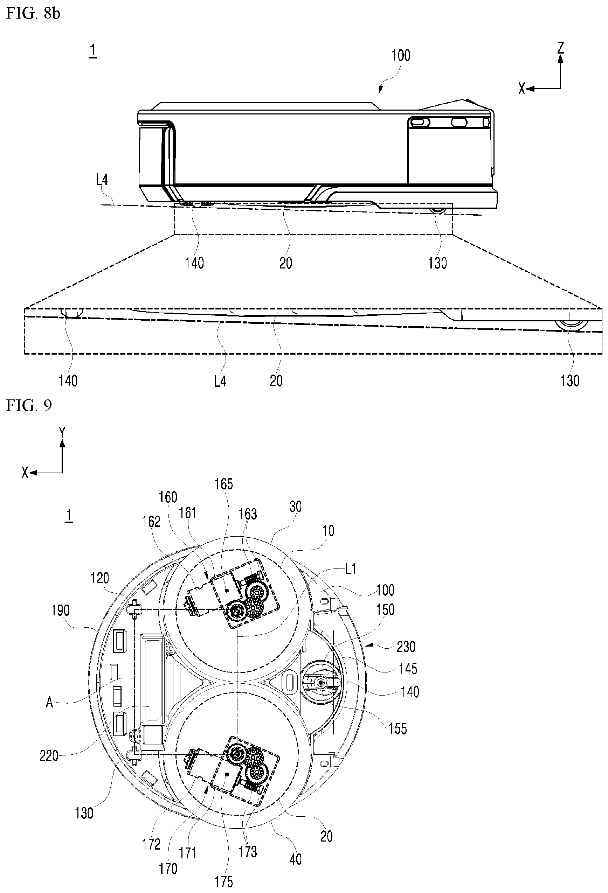

FIG. 6 is a diagram illustrating a bottom view of the cleaner 1 according to still another embodiment of the present invention. FIGS. 7A and 7B are diagrams illustrating a side view of the cleaner 1 shown in FIG. 6. FIGS. 8A and 8B are diagrams illustrating a side view of the cleaner 1 while excluding a partial configuration of the cleaner shown in FIG. 6.

The cleaner 1 according to an embodiment of the present invention may include a first support wheel 120, a second support wheel 130, and an auxiliary wheel 140.

The auxiliary wheel 140 may be formed as described above.

In an embodiment of the present invention, the first support wheel 120 and the second support wheel 130 are spaced apart from each other, and may be formed as common wheels. The first support wheel 120 and the second support wheel 130 may move while rolling in contact with the floor. As a result, the cleaner 1 may move along the floor surface B.

The first support wheel 120 may be coupled to the bottom surface of the body 100 at a position spaced apart from the first rotating plate 10 and the second rotating plate 20, and the second support wheel 130 may also be coupled to the bottom surface of the body 100 at a position spaced apart from the first rotating plate 10 and the second rotating plate 20.

The second support wheel 130 is disposed at the same side as the first support wheel 120 (e.g., at a front of the body 100) with respect to the aforementioned connection line L1. Here, the auxiliary wheel 140 may be disposed at the opposite side to the first support wheel 120 with respect to the connection line L1. That is, the first support wheel 120 and the second support wheel 130 may be disposed in front of the connection line L1, and the auxiliary wheel 140 may be disposed behind the connection line L1.

Considering the entire size of the cleaner 1, a space between the first support wheel 120 and the second support wheel 130 may be formed to be relatively wide. More specifically, when the first support wheel 120 and the second support wheel 130 are placed on the floor surface B (when the rotation axis 125 of the first support wheel 120 and the rotation axis 135 of the second support wheel 130 are substantially parallel to the floor surface B), the first support wheel 120 and the second support wheel 130 may be spaced apart and support at least a part of the load of the cleaner 1 such that the cleaner 1 remains upright without falling sideways.

The first support wheel 120 may be disposed in front of the first rotating plate 10, and the second support wheel 130 may be disposed in front of the second rotating plate 20.

In the cleaner 1 according to an embodiment of the present invention, the first rotating plate 10 and the second rotating plate 20 may be (bilaterally) symmetrical to each other, and the first support wheel 120 and the second support wheel 130 may be (bilaterally) symmetrical to each other with respect to the midline of the body 100 that extends in the front-to-rear direction.

In the cleaner 1 according to an embodiment of the present invention, the lowest part of the first rotating plate 10 may be formed to be higher than a first virtual reference line L3 connecting the lowest part of the first support wheel 120 to the lowest part of the auxiliary wheel 140, and the lowest part of the first mop 30 may be formed to be lower than the first reference line L3 (see FIG. 8A).

Also, the lowest part of the second rotating plate 20 may be formed to be higher than a second virtual reference line L4 connecting the lowest part of the second support wheel 130 to the lowest part of the auxiliary wheel 140, and the lowest part of the second mop 40 may be formed to be lower than the second reference line L4 (see FIG. 8B).

That is, in the cleaner 1 according to an embodiment of the present invention, the first support wheel 120, the second support wheel 130, and the auxiliary wheel 140 do not interfere with the contact of the first mop 30 and the second mop 40 with the floor when the first mop 30 is coupled to the first rotating plate 10 and the second mop 40 is coupled to the second rotating plate 20.

As a result, the first mop 30 and the second mop 40 may come into contact with the floor, and mopping and cleaning can be performed by rotation of the first mop 30 and the second mop 40. Here, the first support wheel 120, the second support wheel 130 and the auxiliary wheel 140 may be spaced apart from the floor. Alternatively, the auxiliary wheel 140 may be spaced apart from the floor while the first support wheel 120 and the second support wheel 130 come into contact with the floor while the first mop 30 and the second mop 40 contact the floor.

In an embodiment of the present invention, when the cleaner 1 is placed on the floor such that the first mop 30 and the second mop 40 are in contact with the floor, the heights from the floor surface B to the lowest part of the first support wheel 120 and from the floor surface B to the lowest part of the second support wheel 130 may be lower than the height from the floor surface B to the lowest part of the auxiliary wheel 140.

Further, when the first mop 30 and the second mop 40 are separated from the first rotating plate 10 and the second rotating plate 20, the first support wheel 120, the second support wheel 130 and the auxiliary wheel 140 may contact the floor, and the first rotating plate 10 and the second rotating plate 20 may be spaced apart from the floor (see FIGS. 8A and 8B).

In this state, even when the operation of the cleaner 1 (rotation of the first rotating plate 10 and the second rotating plate 20) is performed unintendedly, the cleaner 1 is capable of preventing the first rotating plate 10 and the second rotating plate 20 from coming into contact with the floor and rubbing against the floor. As a result, damage to the first rotating plate 10 and the second rotating plate 20 may be avoided, and damage to the floor may be avoided.

In addition, even when the cleaner 1 unintendedly moves on the floor in this state, the first support wheel 120, the second support wheel 130 and the auxiliary wheel 140 can easily roll on the floor, thereby preventing the floor from being scratched, and effectively avoiding damage to the cleaner 1 or the floor.

FIG. 9 is a diagram illustrating a bottom view of the cleaner 1 according to still another embodiment of the present invention, and FIG. 10 is a diagram illustrating an exploded perspective view of the cleaner 1 shown in FIG. 9.

The cleaner 1 according to an embodiment of the present invention may include a first actuator 160, a second actuator 170, a battery 220, a water container 230, and a water supply tube 240.

The first actuator 160 may be coupled to the body 100 to rotate the first rotating plate 10.

The first actuator 160 may include a first case 161, a first motor 162, and one or more first gears 163.

The first case 161 may support the components constituting the first actuator 160, and may be fixedly coupled to the body 100.

The first motor 162 may be formed as an electric motor.

A plurality of first gears 163 may be formed to rotate while being engaged with each other. The first gears 163 may connect the first motor 162 to the first rotating plate 10, and may transmit rotational power of the first motor 162 to the first rotating plate 10. As a result, the first rotating plate 10 may rotate upon rotation of the rotation axis of the first motor 162.

The second actuator 170 may be coupled to the body 100 to rotate the second rotating plate 20.

The second actuator 170 may include a second case 171, a second motor 172, and one or more second gears 173.

The second case 171 may support the components constituting the second actuator 170, and may be fixedly coupled to the body 100.

The second motor 172 may be formed as an electric motor.

A plurality of second gears 173 may be formed to rotate while being engaged with each other. The second gears 173 may connect the second motor 172 to the second rotating plate 20, and may transmit rotation power of the second motor 172 to the second rotating plate 20. As a result, the second rotating plate 20 may be rotate upon rotation of the rotation axis of the second motor 172.

Likewise, in the cleaner 1 according to an embodiment of the present invention, the first rotating plate 10 and the first mop 30 may rotate by the operation of the first actuator 160, and the second rotating plate 20 and the second mop 40 may rotate by the operation of the second actuator 170.

In an embodiment of the present invention, the first actuator 160 may have a center of gravity 165 located inside a vertical area formed by the first rotating plate 10. That is, by disposing the first actuator 160 directly on the first rotating plate 10, loss of power transmitted from the first actuator 160 to the first rotating plate 10 may be minimized, and by applying a relatively heavy load of the first actuator 160 to the first rotating plate 10, the first mop 30 may mop the floor while sufficiently rubbing the floor.

Further, in an embodiment of the present invention, the second actuator 170 may have a center of gravity 175 located inside a vertical area formed by the second rotating plate 20. That is, by disposing the second actuator 170 directly on the second rotating plate 20, loss of power transmitted from the second actuator 170 to the second rotating plate 20 may be minimized, and by applying a relatively heavy load of the second actuator 170 to the second rotating plate 20, the second mop 40 may mop the floor while sufficiently rubbing the floor.

The second actuator 170 may be formed to be (bilaterally) symmetrical to the first actuator 160 with respect to a front-to-rear midline of the body 100.

The battery 220 may be coupled to the body 100, and may supply power to other components of the cleaner 1. The battery 220 may supply power to the first actuator 160 and the second actuator 170, and particularly, the battery 220 may supply power to the first motor 162 and the second motor 172.

In an embodiment of the present invention, the battery 220 may be charged by an external power source, and for this purpose, one side of the body 100 or the battery 220 itself may include a charging terminal for charging the battery 220.

In the cleaner 1 according to an embodiment of the present invention, the battery 220 may be located inside a rectangular vertical area A formed using a center of the first rotating plate 10 (e.g., rotational axis 15), the center of the second rotating plate 20 (e.g., rotational axis 25), the center of the first support wheel 120, and the center of the second support wheel 130 as the respective vertices. That is, the battery 220 may be disposed in front of the connection line L1.

In the cleaner 1 according to an embodiment of the present invention, the battery 220 may be coupled to the body 100 such that the longitudinal direction thereof is parallel to the connection line L1.

The water container 230 may be formed as a container having an inner space such that a liquid such as water can be stored therein. The water container 230 may be fixedly coupled to the body 100, or may be detachably attached to the body 100.

In an embodiment of the present invention, the water container 230 may be located behind the connection line L1, and the water container 230 may be located above an auxiliary wheel 140.

The water supply tube 240 may be formed as a tube or pipe, and may be connected to the water container 230 such that the liquid in the water container 230 flows through the inside of the water supply tube 240. The water supply tube 240 may have an end portion disposed at the opposite side connected to the water container 230. The end portion of the water supply tube 240 is disposed above the first rotating plate 10 and the second rotating plate 20 so that liquid in the water container 230 may be supplied to the first mop 30 and the second mop 40.

In the cleaner 1 according to an embodiment of the present invention, the water supply tube 240 may be formed as one pipe that is branched into two end outlets. One end portion of the branched pipe may be disposed above the first rotating plate 10, and the other end portion of the branched pipe may be disposed above the second rotating plate 20.

In the cleaner 1 according to an embodiment of the present invention, a separate pump may be disposed to move liquid through the water supply tube 240.

The center of gravity of the cleaner 1 may be located inside a rectangular vertical area A formed using the center of the first rotating plate 10, the center of the second rotating plate 20, the center of the first support wheel 120, and the center of the second support wheel 130 as the respective vertices.

In the cleaner 1 according to an embodiment of the present invention, each of the first actuator 160, the second actuator 170, the battery 220, and the water container 230 may be relatively heavy in the cleaner 1. Accordingly, the first actuator 160 and the second actuator 170 may be located on the connection line L1 or adjacent to the connection line L1, the battery 220 may be located in front of the connection line L1, and the water container 230 may be located behind the connection line L1, so that the overall center of gravity of the cleaner 1 may be located at the center of the cleaner 1. Accordingly, the first mop 30 and the second mop 40 may be in stable contact with the floor.

In addition, since the first actuator 160, the second actuator 170, the battery 220 and the water container 230 are each located on different areas in the plan view, it is possible to form a relatively flat body 100 and cleaner 1, and it is possible to form a cleaner 1 that is easily able to enter a space under a shelf or a table.

In addition, according to the cleaner 1 according to an embodiment of the present invention, when the cleaner 1, in which liquid is sufficiently contained in the water container 230, is initially operated, the weight in the cleaner can be distributed evenly such that cleaning is performed while only the first mop 30 and the second mop 40 contact the floor. Here, when the center of gravity of the cleaner 1 moves forward as the liquid inside the water container 230 is consumed, cleaning may be performed while the first mop 30 and the second mop 40 contact the floor together with the first support wheel 120 and the second support wheel 130.

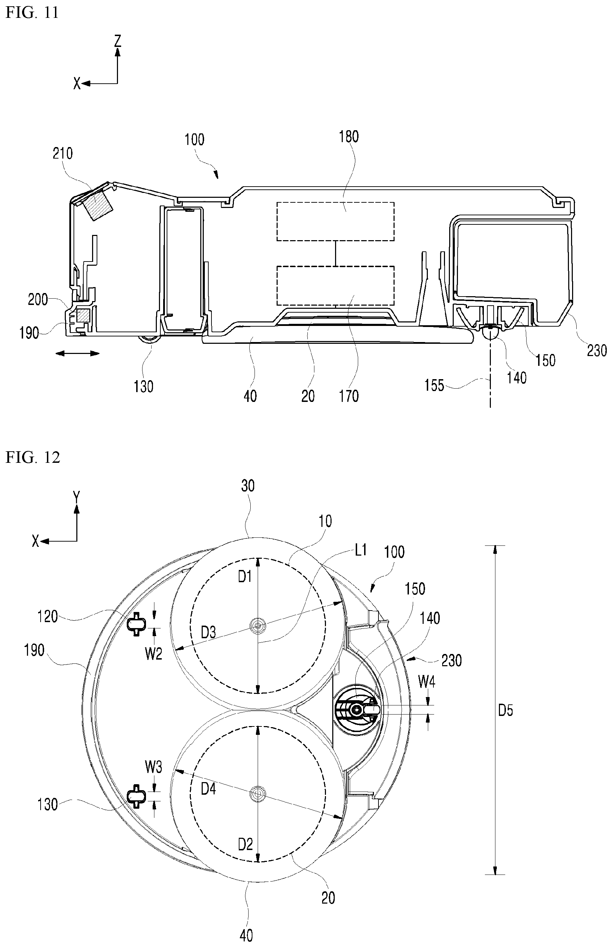

FIG. 11 is a cross-sectional diagram schematically illustrating the cleaner 1 and components thereof according to still another embodiment of the present invention.

The cleaner 1 according to an embodiment of the present invention may include a controller 180, a bumper 190, a first sensor 200, and a second sensor 210.

The controller 180 may be configured to control the operation of the first actuator 160 and the second actuator 170 based on predetermined information or real-time information. In order to control the controller 180, the cleaner 1 may include a storage medium in which an application program is stored. The controller 180 may be configured to control the cleaner 1 by driving the application program according to information inputted to the cleaner 1 and information outputted from the cleaner.

The bumper 190 may be coupled to the body 100 along the edge thereof, and may be configured to move relative to the body 100. For example, the bumper 190 may be coupled to the body 100 so as to reciprocate in a direction toward the center of the body 100.

The bumper 190 may be coupled along a portion of the edge of the body 100, or may be coupled along the entire edge of the body 100.

The first sensor 200 is coupled to the body 100, and may be configured to detect movement (e.g., a relative movement) of the bumper 190 with respect to the body 100. The first sensor 200 may include, for example, a microswitch, a photo interrupter, or a tact switch.

The controller 180 may control the cleaner 1 to avoid an obstacle when the bumper 190 of the cleaner 1 comes into contact with the obstacle, and may control the operation of the first actuator 160 and/or the second actuator 170 based on information obtained by the first sensor 200. For example, when the bumper 190 comes into contact with an obstacle while the cleaner 1 is traveling, the position where the bumper 190 contacts may be recognized by the first sensor 200, and the controller 180 may control the operation of the first actuator 160 and/or the second actuator 170 such that the cleaner 1 moves away from the contact position.

The second sensor 210 may be coupled to the body 100, and configured to detect a relative distance from the obstacle. The second sensor 210 may be a distance sensor.

The controller 180 may control the operation of the first actuator 160 and/or the second actuator 170 such that the cleaner 1 changes its traveling direction or moves away from an obstacle when the distance between the cleaner 1 and the obstacle is less than a predetermined value based on information obtained by the second sensor 210.

FIG. 12 is a diagram illustrating the size of each component in the cleaner 1 shown in FIG. 6.

As described above, the cleaner 1 according to an embodiment of the present invention may move according to the frictional force between the first mop 30 and the floor surface B, which is generated when the first rotating plate 10 rotates, and the frictional force between the second mop 40 and the floor surface B, which is generated when the second rotating plate 20 rotates.

In the cleaner 1 according to an embodiment of the present invention, the first support wheel 120 and the second support wheel 130 may be formed such that the movement (travelling) of the cleaner 1 is not interfered with by the friction with the floor and no increase in load is caused when the cleaner 1 moves (travels).

To this end, a width W2 of the first support wheel 120 and a width W3 of the second support wheel 130 may be significantly smaller than a diameter D1 of the first rotating plate 10 or a diameter D2 of the second rotating plate 20.

Specifically, the width W2 of the first support wheel 120 and the width W3 of the second support wheel 130 may be smaller than 1/10 of the diameter D1 of the first rotating plate 10 or the diameter D2 of the second rotating plate 20.

Further, each of the diameter D1 of the first rotating plate 10 and the diameter D2 of the second rotating plate 20 may be greater than 1/3 and smaller than 1/2 of a diameter D5 of the body 100. Each of a diameter D3 of the first mop 30 and a diameter D4 of the second mop 40 may be larger than 1/3 and smaller than 2/3 of the diameter D5 of the body 100.

As such, even when the cleaner 1 is driven while the first support wheel 120 and the second support wheel 130 are in contact with the floor together with the first mop 30 and the second mop 40, the frictional force between the first support wheel 120 and the floor surface B and the frictional force between the second support wheel 130 and the floor surface B may be made to be significantly smaller than the frictional force between the first mop 30 and the floor surface B and the frictional force between the second mop 40 and the floor surface B, thereby not causing unnecessary power loss and not hindering the movement of the cleaner 1.

In the cleaner 1 according to an embodiment of the present invention, a horizontal distance C1 between the center of the first support wheel 120 and the center of the second support wheel 130 may be formed to be identical to or similar to a horizontal distance C2 between the center of rotation of the first rotating plate 10 and the center of rotation of the second rotating plate 20 (see FIG. 6).

When the horizontal distance between the center of the first support wheel 120 and the center of the second support wheel 130 is C1 and the distance between the center of rotation of the first rotating plate 10 and the center of rotation of the second rotation plate 20 is C2, C1 may be greater than 0.8*C2 and smaller than 1.2*C2.

As a result, the cleaner 1 according to an embodiment of the present invention may be stably supported at four points by the first support wheel 120, the second support wheel 130, the first mop 30, and the second mop 40.

In the cleaner 1 according to an embodiment of the present invention, the rotation axis 125 of the first support wheel 120 and the rotation axis 135 of the second support wheel 130 may be parallel to the connection line L1. That is, the rotation axis 125 of the first support wheel 120 and the rotation axis 135 of the second support wheel 130 may be fixed (fixed bilaterally) to the body 100.

The first support wheel 120 and the second support wheel 130 may be in contact with the floor together with the first mop 30 and the second mop 40. In order to move the cleaner 1 in a straight line, the first mop 30 and the second mop 40 may rotate at a substantially same speed in opposing directions to each other. Herein, the first support wheel 120 and the second support wheel 130 assists in moving the cleaner 1 in a straight line in the front and rear directions.

The cleaner 1 according to an embodiment of the present invention may include an auxiliary wheel body 150. Here, the auxiliary wheel body 150 may be rotatably coupled to the lower portion of the body 100, and the auxiliary wheel 140 may be rotatably coupled to the auxiliary wheel body 150. That is, the auxiliary wheel 140 may be coupled to the body 100 via the auxiliary wheel body 150.

The rotation axis 145 of the auxiliary wheel 140 may be formed to intersect a rotation axis 155 of the auxiliary wheel body 150. The rotation axis 145 of the auxiliary wheel 140 may be perpendicular to the rotation axis 155 of the auxiliary wheel body 150. For example, the rotation axis 155 of the auxiliary wheel body 150 may be directed in the vertical direction or be slightly inclined in the vertical direction, and the rotation axis 145 of the auxiliary 140 may be directed in the horizontal direction.

In the cleaner 1 according to an embodiment of the present invention, the auxiliary wheel 140 may come into contact with the floor surface B when the cleaner 1 is not practically being used for cleaning or movement (e.g., when the first mop 30 and the second mop 40 are separated from the cleaner 1). When the cleaner 1 enters this state, the direction in which the auxiliary wheel 140 is directed by the auxiliary wheel body 150 may be freely changed, and the cleaner 1 may be easily moved.

### INDUSTRIAL APPLICABILITY

A cleaner according to the embodiment of the present invention has remarkable industrial applicability as to providing a cleaner configured such that a floor can be mopped by a first mop and a second mop while preventing damage to a first rotating plate, a second rotating plate, and the floor.

## Claims

1. A cleaner comprising:
a body (100);
a first rotating plate (10) and a second rotating plate (20) rotatably coupled to the body (100);
a first mop (30) configured to be detachably attached to a bottom surface of the first rotating plate (10);
a second mop (40) configured to be detachably attached to a bottom surface of the second rotating plate (20);
a first support wheel (120) coupled to the body (100);
a second support wheel (130) coupled to the body (100) at the same side of the first support wheel (120) with respect to a horizontal connection line connecting a center of the first rotating plate (10) to a center of the second rotating plate (20); and
an auxiliary wheel (140) coupled to the body (100) at the other side of the first support wheel (120) with respect to the connection line,
wherein a lowest part of the first rotating plate (10) is positioned above a first reference line connecting a lowest part of the first support wheel (120) to a lowest part of the auxiliary wheel (140), and a lowest part of the first mop (30) is positioned below the first reference line,
a lowest part of the second rotating plate (20) is positioned above a second reference line connecting a lowest part of the second support wheel (130) to the lowest part of the auxiliary wheel (140), and a lowest part of the second mop (40) is positioned below the second reference line, and
wherein the first rotating plate (10) and the second rotating plate (20) are inclined with respect to the connection line such that interior sides of the first rotating plate (10) and the second rotating plate (20) that are closer to each other are spaced further from the floor surface than exterior sides of the first rotating plate (10) and the second rotating plate (20) that are relatively farther from each other,
wherein, when the first and second rotating plates (10, 20) rotates, frictional force is generated between the bottom surface of the first and second mop (30, 40) and the floor surface (B) to move the cleaner (1) along the floor surface (B).

2. The cleaner of claim 1,
wherein the first rotating plate (10), the second rotating plate (20), the first support wheel (120), the second support wheel (130), and the auxiliary wheel (140) are respectively coupled to a lower portion of the body (100),
wherein the first support wheel (120) is positioned to be closer to the first rotating plate (10) than the second rotating plate (20), and
wherein the second support wheel (130) is positioned to be closer to the second rotating plate (20) than the first rotating plate (10).

3. The cleaner of claim 1,
wherein the first rotating plate (10) and the second rotating plate (20) are symmetrical to each other, and
wherein the first support wheel (120) and the second support wheel (130) are symmetrical to each other.

4. The cleaner of claim 1, wherein widths of the first support wheel (120), the second support wheel (130), and the auxiliary wheel (140) are less than a tenth of a diameter of the first rotating plate (10) or a diameter of the second rotating plate (20).

5. The cleaner of claim 4,
wherein each of the diameters of the first rotating plate (10) and the second rotating plate (20) is in a range of a third to a half of a diameter of the body (100), and
wherein each of a diameter of the first mop (30) and a diameter of the second mop (40) is in a range of a third to two thirds of the diameter of the body (100).

6. The cleaner of claim 1, wherein when a horizontal distance between a center of the first support wheel (120) and a center of the second support wheel (130) is C1 and a distance between a center of rotation of the first rotating plate (10) and a center of rotation of the second rotating plate (20) is C2, C1 is in a range of 0.8 to 1.2 times C2.

7. The cleaner of claim 1, wherein a rotation axis of the first support wheel (120) and a rotation axis of the second support wheel (130) are parallel to the connection line.

8. The cleaner of claim 1, wherein a center of gravity of the cleaner is located inside a rectangular vertical area formed using a center of the first rotating plate (10), a center of the second rotating plate (20), the center of the first support wheel (120), and the center of the second support wheel (130) as respective vertices.

9. The cleaner of claim 1, wherein the cleaner is supported at four points by the first mop (30), the second mop (40), the first support wheel (120), and the second support wheel (130).

10. The cleaner of claim 1, further comprising:
a water container (230) formed as a container so as to store liquid, the water container (230) being coupled to the body (100); and
a water supply tube (240) connected to the water container (230) so as to supply liquid in the water container (230) to the first mop (30) and the second mop (40),
wherein the water container (230) is positioned above the auxiliary wheel (140).

11. The cleaner of claim 1, further comprising:
a first actuator (160) provided in the body (100) to rotate the first rotating plate (10), the first actuator (160) having a center of gravity located inside a vertical area associated with the first rotating plate (10);
a second actuator (170) provided in the body (100) to rotate the second rotating plate (20), the second actuator (170) having a center of gravity located inside a vertical area associated with the second rotating plate (20); and
a battery (220) coupled to the body (100) to supply power to the first actuator (160) and the second actuator (170), the battery (220) being positioned in a rectangular vertical area formed using a center of the first rotating plate (10), a center of the second rotating plate (20), a center of the first support wheel (120), and a center of the second support wheel (130) as respective vertices.

12. The cleaner of claim 1, further comprising:
a first actuator (160) coupled to the body (100) to rotate the first rotating plate (10);
a second actuator (170) coupled to the body (100) to rotate the second rotating plate (20); and
a controller (180) configured to control operation of the first actuator (160) and the second actuator (170) based on predetermined information or real-time information.

13. The cleaner of claim 12, further comprising:
a bumper (190) coupled along the edge of the body (100) so as to move relative to the body (100); and
a first sensor (200) coupled to the body (100), the first sensor (200) being configured to sense when the bumper (190) moves relative to the body (100),
wherein the controller (180) is configured to control the operation of the first actuator(160) and the second actuator (170) based on whether the first sensor (200) senses the bumper (190) moving relative to the body (100).

14. The cleaner of claim 12, further comprising:
a second sensor (210) coupled to the body (100), the second sensor (210) being configured to sense a relative distance from an obstacle,
wherein the controller (180) is configured to control the operation of the first actuator (160) and the second actuator (170) based on the distance from the obstacle detected by the second sensor (210).

## Patentansprüche

1. Reiniger, der Folgendes umfasst:
einen Körper (100);
eine erste drehbare Platte (10) und eine zweite drehbare Platte (20), die mit dem Körper (100) drehbar gekoppelt sind;
einen ersten Mopp (30), der so konfiguriert ist, dass er an einer Bodenfläche der ersten drehbaren Platte (10) abnehmbar befestigt ist;
einen zweiten Mopp (40), der so konfiguriert ist, dass er an einer Bodenfläche der zweiten drehbaren Platte (20) abnehmbar befestigt ist;
ein erstes tragendes Rad (120), das mit dem Körper (100) gekoppelt ist;
ein zweites tragendes Rad (130), das mit dem Körper (100) auf der gleichen Seite wie das erste tragende Rad (120) in Bezug auf eine horizontale Verbindungslinie gekoppelt ist, die das Zentrum der ersten drehbaren Platte (10) mit dem Zentrum der zweiten drehbaren Platte (20) verbindet; und
ein zusätzliches Rad (140), das in Bezug auf die Verbindungslinie auf der anderen Seite des ersten tragenden Rads (120) mit dem Körper (100) gekoppelt ist,
wobei ein unterster Teil der ersten drehbaren Platte (10) über einer ersten Referenzlinie positioniert ist, die einen untersten Teil des ersten tragenden Rads (120) mit einem untersten Teil des zusätzlichen Rads (140) verbindet, und wobei ein unterster Teil des ersten Mopps (30) unter der ersten Referenzlinie positioniert ist,
ein unterster Teil der zweiten drehbaren Platte (20) über einer zweiten Referenzlinie positioniert ist, die einen untersten Teil des zweiten tragenden Rads (130) mit dem untersten Teil des zusätzlichen Rads (140) verbindet, und wobei ein unterster Teil des zweiten Mopps (40) unter der zweiten Referenzlinie positioniert ist, und
wobei die erste drehbare Platte (10) und die zweite drehbare Platte (20) in Bezug auf die Verbindungslinie geneigt sind, so dass innere Seiten der ersten drehbaren Platte (10) und der zweiten drehbaren Platte (20), die näher beieinander liegen, weiter von der Bodenfläche beabstandet sind als äußere Seiten der ersten drehbaren Platte (10) und der zweiten drehbaren Platte (20), die im Verhältnis weiter voneinander entfernt sind,
wobei dann, wenn sich die erste und die zweite drehbare Platte (10, 20) drehen, eine Reibungskraft zwischen der Unterseite des ersten und des zweiten Mopps (30, 40) und der Bodenfläche (B) erzeugt wird, um den Reiniger (1) längs der Bodenfläche (B) zu bewegen.

2. Reiniger nach Anspruch 1,
wobei die erste drehbare Platte (10), die zweite drehbare Platte (20), das erste tragende Rad (120), das zweite tragende Rad (130) und das zusätzliche Rad (140) jeweils mit einem unteren Abschnitt des Körpers (100) gekoppelt sind,
wobei das erste tragende Rad (120) so positioniert ist, dass es sich näher an der ersten drehbaren Platte (10) als an der zweiten drehbaren Platte (20) befindet, und
wobei das zweite tragende Rad (130) so positioniert ist, dass es sich näher an der zweiten drehbaren Platte (20) als an der ersten drehbaren Platte (10) befindet.

3. Reiniger nach Anspruch 1,
wobei die erste drehbare Platte (10) und die zweite drehbare Platte (20) symmetrisch zueinander sind, und
wobei das erste tragende Rad (120) und das zweite tragende Rad (130) symmetrisch zueinander sind.

4. Reiniger nach Anspruch 1, wobei Breiten des ersten tragenden Rads (120), des zweiten tragenden Rads (130) und des zusätzlichen Rads (140) weniger als ein Zehntel eines Durchmessers der ersten drehbaren Platte (10) oder eines Durchmessers der zweiten drehbaren Platte (20) betragen.

5. Reiniger nach Anspruch 4,
wobei die Durchmesser der ersten drehbaren Platte (10) und der zweiten drehbaren Platte (20) im Bereich von einem Drittel bis zur Hälfte eines Durchmessers des Körpers (100) liegen, und
wobei ein Durchmesser des ersten Mopps (30) und ein Durchmesser des zweiten Mopps (40) in einem Bereich von einem Drittel bis zu zwei Dritteln des Durchmessers des Körpers (100) liegen.

6. Reiniger nach Anspruch 1, wobei dann, wenn ein horizontaler Abstand zwischen dem Zentrum des ersten tragenden Rads (120) und dem Zentrum des zweiten tragenden Rads (130) C1 ist, und ein Abstand zwischen dem Drehzentrum der ersten drehbaren Platte (10) und dem Drehzentrum der zweiten drehbaren Platte (20) C2 ist, C1 im Bereich des 0,8- bis 1,2-Fachen von C2 liegt.

7. Reiniger nach Anspruch 1, wobei die Drehachse des ersten tragenden Rads (120) und die Drehachse des zweiten tragenden Rads (130) parallel zur Verbindungslinie liegen.

8. Reiniger nach Anspruch 1, wobei ein Masseschwerpunkt des Reinigers innerhalb eines rechteckigen vertikalen Bereichs liegt, der unter Verwendung des Zentrum der ersten drehbaren Platte (10), des Zentrums der zweiten drehbaren Platte (20), des Zentrums des ersten tragenden Rads (120) und des Zentrums des zweiten tragenden Rads (130) als jeweilige Eckpunkte gebildet wird.

9. Reiniger nach Anspruch 1, wobei der Reiniger an vier Punkten durch den ersten Mopp (30), den zweiten Mopp (40), das erste tragende Rad (120) und das zweite tragende Rad (130) getragen wird.

10. Reiniger nach Anspruch 1, der ferner Folgendes umfasst:
einen Wasserbehälter (230), der als ein Behälter zum Speichern von Flüssigkeit ausgebildet ist, wobei der Wasserbehälter (230) mit dem Körper (100) gekoppelt ist; und
ein Wasserzufuhrröhrchen (240), das mit dem Wasserbehälter (230) verbunden ist, um Flüssigkeit im Wasserbehälter (230) dem ersten Mopp (30) und dem zweiten Mopp (40) zuzuführen,
wobei der Wasserbehälter (230) über dem zusätzlichen Rad (140) positioniert ist.

11. Reiniger nach Anspruch 1, der ferner Folgendes umfasst:
einen ersten Aktuator (160), der im Körper (100) zum Drehen der ersten drehbaren Platte (10) vorgesehen ist, wobei der erste Aktuator (160) einen Masseschwerpunkt hat, der sich in einem vertikalen Bereich befindet, der zur ersten drehbaren Platte (10) gehört;
einen zweiten Aktuator (170), der im Körper (100) zum Drehen der zweiten drehbaren Platte (20) vorgesehen ist, wobei der zweite Aktuator (170) einen Masseschwerpunkt hat, der sich in einem vertikalen Bereich befindet, der zur zweiten drehbaren Platte (20) gehört; und
eine Batterie (220), die mit dem Körper (100) gekoppelt ist, um dem ersten Aktuator (160) und dem zweiten Aktuator (170) Leistung zuzuführen, wobei die Batterie (220) in einem rechteckigen vertikalen Bereich positioniert ist, der unter Verwendung des Zentrums der ersten drehbaren Platte (10), des Zentrums der zweiten drehbaren Platte (20), des Zentrums des ersten tragenden Rads (120) und des Zentrums des zweiten tragenden Rads (130) als entsprechende Eckpunkte gebildet wird.

12. Reiniger nach Anspruch 1, der ferner Folgendes umfasst:
einen ersten Aktuator (160), der mit dem Körper (100) zum Drehen der ersten drehbaren Platte (10) gekoppelt ist;
einen zweiten Aktuator (170), der mit dem Körper (100) zum Drehen der zweiten drehbaren Platte (20) gekoppelt ist; und
eine Steuereinheit (180), die konfiguriert ist, den Betrieb des ersten Aktuators (160) und des zweiten Aktuators (170) auf der Basis von zuvor festgelegten Informationen oder von Echtzeitinformationen zu steuern.

13. Reiniger nach Anspruch 12, der ferner Folgendes umfasst:
einen Stoßdämpfer (190), der längs der Kante des Körpers (100) gekoppelt ist, so dass er sich relativ zum Körper (100) bewegt; und
einen ersten Sensor (200), der mit dem Körper (100) gekoppelt ist, wobei der erste Sensor (200) konfiguriert ist, zu erfassen, wenn sich der Stoßdämpfer (190) relativ zum Körper (100) bewegt,
wobei die Steuereinheit (180) konfiguriert ist, den Betrieb des ersten Aktuators (160) und des zweiten Aktuators (170) basierend darauf zu steuern, ob der erste Sensor (200) erfasst, dass sich der Stoßdämpfer (190) relativ zum Körper (100) bewegt.

14. Reiniger nach Anspruch 12, der ferner Folgendes umfasst:
einen zweiten Sensor (210), der mit dem Körper (100) gekoppelt ist, wobei der zweite Sensor (210) konfiguriert ist, einen relativen Abstand von einem Hindernis zu erfassen,
wobei die Steuereinheit (180) konfiguriert ist, den Betrieb des ersten Aktuators (160) und des zweiten Aktuators (170) basierend auf dem Abstand vom Hindernis, der durch den zweiten Sensor (210) detektiert wird, zu steuern.

## Revendications

1. Appareil de nettoyage comportant :
un corps (100) ;
une première plaque rotative (10) et une seconde plaque rotative (20) couplées en rotation au corps (100) ;
un premier balai laveur (30) configuré pour être fixé de manière détachable sur une surface inférieure de la première plaque rotative (10) ;
un second balai laveur (40) configuré pour être fixé de manière détachable sur une surface inférieure de la seconde plaque rotative (20) ;
une première roue de support (120) couplée au corps (100) ;
une seconde roue de support (130) couplée au corps (100) du même côté de la première roue de support (120) par rapport à une ligne de liaison horizontale reliant un centre de la première plaque rotative (10) à un centre de la seconde plaque rotative (20) ; et
une roue auxiliaire (140) couplée au corps (100) de l'autre côté de la première roue de support (120) par rapport à la ligne de liaison,
dans lequel une partie la plus basse de la première plaque rotative (10) est positionnée au-dessus d'une première ligne de référence reliant une partie la plus basse de la première roue de support (120) à une partie la plus basse de la roue auxiliaire (140), et une partie la plus basse du premier balai laveur (30) est positionnée au-dessous de la première ligne de référence,
une partie la plus basse de la seconde plaque rotative (20) est positionnée au-dessus d'une seconde ligne de référence reliant une partie la plus basse de la seconde roue de support (130) à la partie la plus basse de la roue auxiliaire (140), et une partie la plus basse du second balai laveur (40) est positionnée au-dessous de la seconde ligne de référence, et
dans lequel la première plaque rotative (10) et la seconde plaque rotative (20) sont inclinées par rapport à la ligne de liaison de telle sorte que des côtés intérieurs de la première plaque rotative (10) et de la seconde plaque rotative (20) qui sont plus près l'un de l'autre sont plus espacés de la surface de sol que des côtés extérieurs de la première plaque rotative (10) et de la seconde plaque rotative (20) qui sont relativement plus éloignés l'un de l'autre,
dans lequel, lorsque les première et seconde plaques rotatives (10, 20) tournent, une force de frottement est générée entre la surface inférieure des premier et second balais laveur (30, 40) et la surface de sol (B) pour déplacer l'appareil de nettoyage (1) le long de la surface de sol (B).

2. Appareil de nettoyage selon la revendication 1,
dans lequel la première plaque rotative (10), la seconde plaque rotative (20), la première roue de support (120), la seconde roue de support (130) et la roue auxiliaire (140) sont respectivement couplées à une partie inférieure du corps (100),
dans lequel la première roue de support (120) est positionnée pour être plus près de la première plaque rotative (10) que de la seconde plaque rotative (20), et
dans lequel la seconde roue de support (130) est positionnée pour être plus près de la seconde plaque rotative (20) que de la première plaque rotative (10).

3. Appareil de nettoyage selon la revendication 1,
dans lequel la première plaque rotative (10) et la seconde plaque rotative (20) sont symétriques l'une à l'autre, et
dans lequel la première roue de support (120) et la seconde roue de support (130) sont symétriques l'une à l'autre.

4. Appareil de nettoyage selon la revendication 1, dans lequel des largeurs de la première roue de support (120), de la seconde roue de support (130) et de la roue auxiliaire (140) sont inférieures à un dixième d'un diamètre de la première plaque rotative (10) ou d'un diamètre de la seconde plaque rotative (20).

5. Appareil de nettoyage selon la revendication 4,
dans lequel chacun des diamètres de la première plaque rotative (10) et de la seconde plaque rotative (20) est dans un intervalle d'un tiers à la moitié d'un diamètre du corps (100), et
dans lequel chaque diamètre parmi un diamètre du premier balai laveur (30) et un diamètre du second balai laveur (40) est dans un intervalle d'un tiers à deux tiers du diamètre du corps (100).

6. Appareil de nettoyage selon la revendication 1, dans lequel, lorsqu'une distance horizontale entre un centre de la première roue de support (120) et un centre de la seconde roue de support (130) est C1 et qu'une distance entre un centre de rotation de la première plaque rotative (10) et un centre de rotation de la seconde plaque rotative (20) est C2, C1 est dans un intervalle de 0,8 à 1,2 fois C2.

7. Appareil de nettoyage selon la revendication 1, dans lequel un axe de rotation de la première roue de support (120) et un axe de rotation de la seconde roue de support (130) sont parallèles à la ligne de liaison.

8. Appareil de nettoyage selon la revendication 1, dans lequel un centre de gravité de l'appareil de nettoyage est situé à l'intérieur d'une zone verticale rectangulaire formée en utilisant un centre de la première plaque rotative (10), un centre de la seconde plaque rotative (20), le centre de la première roue de support (120) et le centre de la seconde roue de support (130) comme sommets respectifs.

9. Appareil de nettoyage selon la revendication 1, dans lequel l'appareil de nettoyage est supporté en quatre points par le premier balai laveur (30), le second balai laveur (40), la première roue de support (120) et la seconde roue de support (130).

10. Appareil de nettoyage selon la revendication 1, comportant en outre :
un réservoir d'eau (230) formé comme un récipient de manière à stocker du liquide, le réservoir d'eau (230) étant couplé au corps (100) ; et
un tube d'alimentation en eau (240) raccordé au réservoir d'eau (230) de manière à fournir le liquide contenu dans le réservoir d'eau (230) au premier balai laveur (30) et au second balai laveur (40),
dans lequel le réservoir d'eau (230) est positionné au-dessus de la roue auxiliaire (140).

11. Appareil de nettoyage selon la revendication 1, comportant en outre :
un premier actionneur (160) agencé dans le corps (100) pour faire tourner la première plaque rotative (10), le premier actionneur (160) ayant un centre de gravité situé à l'intérieur d'une zone verticale associée à la première plaque rotative (10) ;
un second actionneur (170) agencé dans le corps (100) pour faire tourner la seconde plaque rotative (20), le second actionneur (170) ayant un centre de gravité situé à l'intérieur d'une zone verticale associée à la seconde plaque rotative (20) ; et
une batterie (220) couplée au corps (100) pour fournir de l'énergie au premier actionneur (160) et au second actionneur (170), la batterie (220) étant positionnée dans une zone verticale rectangulaire formée en utilisant un centre de la première plaque rotative (10), un centre de la seconde plaque rotative (20), un centre de la première roue de support (120) et un centre de la seconde roue de support (130) comme sommets respectifs.

12. Appareil de nettoyage selon la revendication 1, comportant en outre :
un premier actionneur (160) couplé au corps (100) pour faire tourner la première plaque rotative (10) ;
un second actionneur (170) couplé au corps (100) pour faire tourner la seconde plaque rotative (20) ; et
une commande (180) configurée pour commander un fonctionnement du premier actionneur (160) et du second actionneur (170) sur la base d'informations prédéterminées ou d'informations en temps réel.

13. Appareil de nettoyage selon la revendication 12, comportant en outre :
un pare-chocs (190) couplé le long du bord du corps (100) de manière à bouger par rapport au corps (100) ; et
un premier capteur (200) couplé au corps (100), le premier capteur (200) étant configuré pour détecter lorsque le pare-chocs (190) bouge par rapport au corps (100),
dans lequel la commande (180) est configurée pour commander le fonctionnement du premier actionneur (160) et du second actionneur (170) sur la base de si le premier capteur (200) détecte que le pare-chocs (190) bouge par rapport au corps (100).

14. Appareil de nettoyage selon la revendication 12, comportant en outre :
un second capteur (210) couplé au corps (100), le second capteur (210) étant configuré pour détecter une distance relative par rapport à un obstacle,
dans lequel la commande (180) est configurée pour commander le fonctionnement du premier actionneur (160) et du second actionneur (170) sur la base de la distance par rapport à l'obstacle détectée par le second capteur (210).
